# EUROPÄISCHE PATENTSCHRIFT

(11) **EP 1 524 151 B1**
(45) Veröffentlichungstag und Bekanntmachung des Hinweises auf die Patenterteilung: **12.03.2008**
(21) Anmeldenummer: 04023390.0
(22) Anmeldetag: 01.10.2004
(51) Int. Cl.: B60Q 5/00

(54) **Lenkradhupenkontakteinheit und Baugruppe**
Horn switch device for steering wheel and assembly comprising such a device
Dispositif de commande d'avertisseur sonore pour volant de direction et module comprenant un tel dispositif

(30) Priorität: 15.10.2003 DE 20315868 U
(43) Veröffentlichungstag der Anmeldung: 20.04.2005
(73) Patentinhaber: TRW Automotive Safety Systems GmbH, 63743 Aschaffenburg (DE)
(72) Erfinder: Burgard, Jürgen, 63768 Hösbach (DE); Fleckenstein, Jupp, 63856 Bessenbach (DE); Fuchs, Michael, 63825 Westerngrund (DE); Stransfeld, Bernd, 63762 Grossostheim (DE)
(74) Vertreter: Kitzhofer, Thomas

(56) Entgegenhaltungen:
- EP-A- 0 704 367
- WO-A-20/04026639
- US-A- 5 303 952

## Beschreibung

Die Erfindung betrifft eine Lenkradhupenkontakteinheit nach dem Oberbegriff des Anspruchs 1, also einen Teil des im Fahrzeuglenkrad integrierten Schaltkreises für die Betätigung der Hupe.

Die Erfindung betrifft insbesondere eine Hupenkontakteinheit für ein sogenanntes Floating-horn-Modul, d.h. ein Gassackmodul, das in Axialrichtung des Lenkrads verschieblich gelagert ist, um am Ende des Verschiebewegs den Stromkreis für die Hupe zu schließen. Auf der Rückseite des Gassackmoduls ist deshalb üblicherweise entweder am Modul selbst oder an einem Zwischenblech zwischen Modul und Lenkradskelett mindestens eine Hupenkontakteinheit angeordnet.

Die Lenkradhupenkontakteinheit der gattungsgemäßen US 5 303 952 A hat ein erstes Kontaktblech, das in ein Trägerteil eingebettet ist und den Boden einer Ausnehmung im Trägerteil bildet. Ein zweites Kontaktblech mit einer abgewinkelten Zuge ist so außerhalb der Ausnehmung oberhalb des Trägerteils angeordnet, daß die Zunge teilweise in die Ausnehmung hineinragt. Zur Hupenbetätigung drückt ein Stößel von oben auf die Zunge, bis deren freies Ende das erste Kontaktblech am Boden der Ausnehmung berührt.

Die Erfindung hat sich zur Aufgabe gestellt, eine transportsichere Lenkradhupenkontakteinheit zu schaffen, die dennoch ein sogenanntes weiches Schließen der Hupkontakte ermöglicht.

Die erfindungsgemäße Lenkradhupenkontakteinheit umfaßt hierzu die Merkmale des Anspruchs 1.

Die freikragende Hupenkontaktzunge ist derjenige Teil des Kontaktblechs, der mit dem Gegenkontakt zur Hupenbetätigung in Berührung kommt. Indem dieser Teil des Kontaktblechs als freikragende Zunge ausgeführt ist, wird er wie eine Blattfeder elastisch nachgiebig, wenn der Gegenkontakt auf die Hupenkontaktzunge drückt. Dies ermöglicht ein weiches Schalten. Das Trägerteil umgibt die Hupenkontaktzunge seitlich und schützt sie vor einem Verbiegen während des Transports oder der Montage, so daß der durch die Lage der Hupenkontaktzunge bei ihrer Herstellung festgelegte Kontaktzeitpunkt und der Kontaktabstand genau eingehalten werden können. Vorzugsweise ist die Hupenkontaktzunge schräg gegenüber dem Rest des Kontaktblechs, der üblicherweise in einer Ebene senkrecht zur Schaltbewegungsrichtung (Bewegungsrichtung des Moduls bei der Hupenbetätigung) liegt, abgewinkelt. Dies soll für ein besonders weiches Schalten sorgen.

Eine weitere Verbesserung der Transportsicherheit wird erreicht, indem das Trägerteil in und entgegen der Schaltbewegungsrichtung wenigstens mit jenem Abschnitt, mit welchem das Trägerteil die Hupenkontaktzunge umgibt, gegenüber dieser vorsteht. Im eingebauten Zustand und in einem Querschnitt in Lenkradachse bedeutet dies, daß das Trägerteil nach oben und nach unten gegenüber der Hupenkontaktzunge vorsteht und diese wie ein Schutzring umgibt.

Der beste Schutz kann natürlich erreicht werden, wenn der die Hupenkontaktzunge umgebende Abschnitt des Trägerteils ein umfangsmäßig geschlossener Ring ist.

Zur Erhöhung der Sicherheit gegen Verbiegen des Kontaktblechs auch in anderen Abschnitten umgibt das Trägerteil in Schaltbewegungsrichtung gesehen das Kontaktblech vollständig. Dies erhöht auch die Stabilität der Hupenkontakteinheit.

Das Trägerteil kann auch noch Zusatzfunktionen übernehmen, indem es beispielsweise wenigstens eine angeformte Aufnahme für eine Rückstellfeder besitzt. Diese Rückstellfeder dient der Rückstellung des Moduls nach seiner Verschiebung zur Hupenbetätigung.

Eine sichere Verbindung zwischen Trägerteil und Kontaktblech wird gewährleistet, wenn das Trägerteil durch Umspritzen des Kontaktblechs hergestellt ist.

Natürlich kann das Kontaktblech auch mehrere Hupenkontaktzungen haben. Diese sind jeweils von einem zugeordneten Abschnitt des Trägerteils umgeben, wie zuvor erwähnt.

Die Erfindung betrifft auch eine Baugruppe mit einer Zwischenplatte für das Gassackmodul, an der das Gassackmodul entweder fest oder beweglich angebracht ist, und mit einer erfindungsgemäßen Lenkradhupenkontakteinheit. An dem Trägerteil sind zur Verrastung an der Zwischenplatte Rastnasen angeformt, die eine leichte Verbindung zwischen der Zwischenplatte und der Hupenkontakteinheit gewährleisten.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 eine Querschnittsansicht durch ein Lenkrad mit einer erfindungsgemäßen Baugruppe und einer erfindungsgemäßen Lenkradhupenkontakteinheit,
- Figur 2 eine Draufsicht auf die erfindungsgemäße Baugruppe und die erfindungsgemäße Lenkradhupenkontakteinheit und
- Figur 3 eine perspektivische Ansicht des bei der erfindungsgemäßen Lenkradhupenkontakteinheit vorgesehenen Kontaktblechs vor dessen Umspritzung.

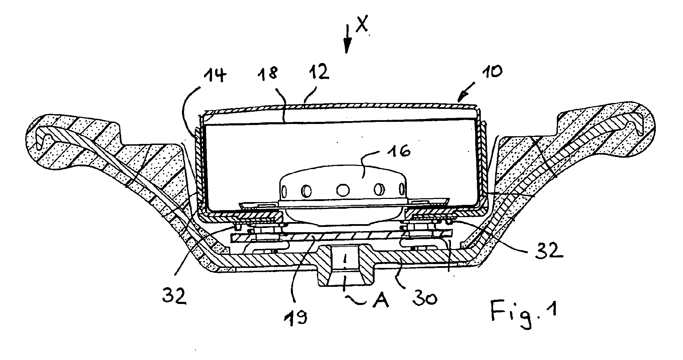

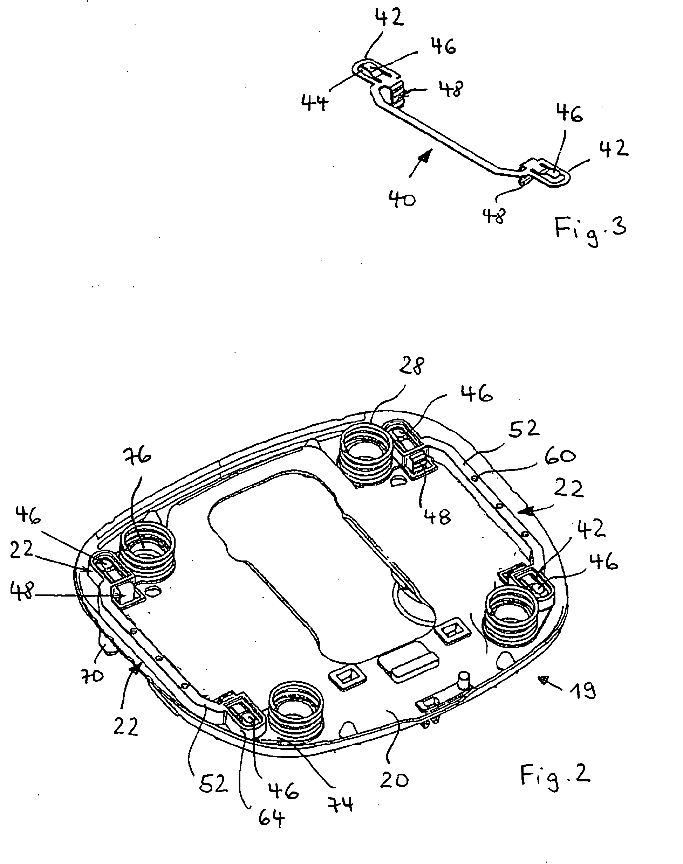

In Figur 1 ist ein Fahrzeuglenkrad mit einem Gassackmodul 10 dargestellt. Das Gassackmodul 10 weist ein Außengehäuse auf, das durch eine vorderseitige Abdeckung 12 und einen topfförmigen Generatorträger 14 gebildet ist. Im Gassackmodul 10 sind unter anderem ein Gasgenerator 16 und ein Gassack 18 angeordnet. Rückseitig ist der Gasgeneratorträger 14 mit einer Baugruppe 19, die eine Zwischenplatte 20 (siehe Fig. 2) aufweist, verbunden. Die Baugruppe 19 umfaßt die weitgehend ebene Zwischenplatte 20 aus Blech und zwei langgestreckte Lenkradhupenkontakteinheiten 22 an den Seitenrändern der Zwischenplatte.

Das Gassackmodul 10 sitzt durch Rückstellfedern 28, die an der Baugruppe 19 befestigt sind, in Axialrichtung, bezogen auf die Lenkradachse A, verschieblich auf der Zwischenplatte 20, die wiederum fest mit dem Lenkradskelett 30 verbunden ist.

Das Gassackmodul ist ein sogenanntes Floating-horn-Modul, welches durch Drücken in Schaltbewegungsrichtung X verschoben werden kann, bis ein Hupenschaltkreis geschlossen wird, um die Hupe zu betätigen. Auf der Unterseite des Generatorträgers 14 sind dazu mehrere vorstehende Kontakte 32 angeordnet. Für jeden Kontakt 32 gibt es auf der Baugruppe einen Gegenkontakt auf den Lenkradhupenkontakteinheiten 22.

Die Lenkradhupenkontakteinheiten 22 umfassen jeweils ein in Figur 3 gezeigtes gestanztes Kontaktblech 40, das an seinen entgegengesetzten Enden zwei Lappen 42 aufweist, in deren Inneren durch eine U-förmige Ausstanzung 44 jeweils eine freikragende Hupenkontaktzunge 46 entsteht. Die Hupenkontaktzungen 46 sind federnd ausgebildet und wirken wie eine Blattfeder. Darüber hinaus sind sie nach oben gegenüber dem Rest des ansonsten ebenen Kontaktblechs 40 schräg abgewinkelt. Im Bereich der Ansätze der Hupenkontaktzungen 46 sind am Kontaktblech 40 nach unten abgewinkelte Anschlußlappen 48 vorgesehen, auf die Anschlüsse von elektrischen Leitern als Teil des Hupenschaltkreises aufgesteckt werden.

Zur Schaffung der Lenkradhupenkontakteinheit 22 wird jedes Kontaktblech 40 mit Kunststoff umspritzt, so daß sich ein Trägerteil 52 aus Kunststoff ergibt, das in Schaltbewegungsrichtung X, d.h. wie in Figur 2 von oben, gesehen das Kontaktblech 40 randseitig komplett umgibt und auch von oben und unten großteils vollständig abdeckt. Kleine Öffnungen 60, die durch das Trägerteil 52 bis zum Kontaktblech 40 verlaufen, ergeben sich beim Spritzgießen durch Positionierstifte für das Kontaktblech 40. Bis auf den Innenrand der Lappen 42, die Hupenkontaktzungen 46 und die Lappen 48 ist das Kontaktblech vollständig im Trägerteil 52 eingebettet. Der Abschnitt 64 jedes Trägerteils 52, der um die Hupenkontaktzunge 46 angeordnet ist, bildet einen umfangsmäßig geschlossenen Rahmen, um die jeweilige Hupenkontaktzunge 46, so daß die Hupenkontaktzungen 46 seitlich gegen Krafteinwirkung, die zum Verbiegen derselben führen würden, geschützt sind. Auch die Höhe des Abschnitts 64 (gemessen in Richtung X) ist so gewählt, daß der Abschnitt 64 nach oben und unten gegenüber der zugeordneten Hupenkontaktzunge 46 vorsteht. Dadurch soll die Hupenkontaktzunge 46 auch gegen versehentliches Verbiegen durch Krafteinwirkung von oben oder unten geschützt werden. Der Abschnitt 64 umgibt die zugeordnete Hupenkontaktzunge 46 sozusagen wie ein Schutzrahmen.

Zur Vereinfachung der Befestigung der Lenkradhupenkontakteinheiten 22 an der Trägerplatte sind Rastnasen 70 am Trägerteil 52 angeformt, die nach dem Einstecken in entsprechende Öffnungen für ein Verriegeln der Lenkradhupenkontakteinheiten 22 an der Zwischenplatte 20 sorgen.

In der Nähe der Abschnitte 64 sind noch an jedem Trägerteil 52 Fortsätze 74 angeformt, die eine ringförmige Erhöhung 76 aufweisen. Auf die als Lager wirkenden Erhöhungen 76 werden die Federn 28 einfach von oben aufgesetzt, um am Trägerteil 52 zu verrasten.

Beim Drücken des Gassackmoduls 10 in Schaltbewegungsrichtung X werden die Federn 28 zusammengedrückt, bis die Kontakte 32 weich gegen die Hupenkontaktzungen 46 drücken, um den Hupenschaltkreis zu schließen.

## Patentansprüche

1. Lenkradhupenkontakteinheit, mit
einem Kontaktblech (40),
und einem Trägerteil (52) aus Kunststoff, wobei das Kontaktblech (40) wenigstens eine freikragende Hupenkontaktzunge (46) besitzt, die in Schaltbewegungsrichtung (X) gesehen vom Trägerteil (52) umgeben ist,
**dadurch gekennzeichnet, daß** das Kontaktblech (40) in das Trägerteil (52) aus Kunststoff eingebettet und in diesem gelagert ist
und das Trägerteil (52) in und entgegen der Schaltbewegungsrichtung (X) wenigstens in jenem Abschnitt (64), mit welchem es die Hupenkontaktzunge (46) umgibt, gegenüber der Hupenkontaktzunge (46) vorsteht.

2. Lenkradhupenkontakteinheit nach Anspruch 1, **dadurch gekennzeichnet, daß** die Hupenkontaktzunge (46) schräg gegenüber dem Rest des Kontaktblechs (40) abgewinkelt ist.

3. Lenkradhupenkontakteinheit nach einem der vorhergehenden Ansprüche, **dadurch gekennzeichnet, daß** das Trägerteil (52) in Schaltbewegungsrichtung (X) gesehen das Kontaktblech (40) vollständig umgibt.

4. Lenkradhupenkontakteinheit nach einem der vorhergehenden Ansprüche, **dadurch gekennzeichnet, daß** der die Hupenkontaktzunge (46) umgebende Abschnitt (64) des Trägerteils (52) ein umfangsmäßig geschlossener Ring ist.

5. Lenkradhupenkontakteinheit nach einem der vorhergehenden Ansprüche, **dadurch gekennzeichnet, daß** das Trägerteil (52) wenigstens eine angeformte Lagerung für eine Rückstellfeder (28) besitzt.

6. Lenkradhupenkontakteinheit nach einem der vorhergehenden Ansprüche, **dadurch gekennzeichnet, daß** das Trägerteil (52) durch Umspritzen des Kontaktblechs (40) hergestellt ist.

7. Lenkradhupenkontakteinheit nach einem der vorhergehenden Ansprüche, **dadurch gekennzeichnet, daß** ein Kontaktblech (40) mehrere Hupenkontaktzungen (46) hat, die jeweils von einem zugeordneten Abschnitt (64) des Trägerteils (52) umgeben sind.

8. Baugruppe, mit einer Zwischenplatte (20) für ein Gassackmodul (10), an welcher das Gassackmodul (10) befestigt ist, und wenigstens einer Lenkradhupenkontakteinheit (22) nach einem der vorhergehenden Ansprüche.

9. Baugruppe nach Anspruch 8, **dadurch gekennzeichnet, daß** an dem Trägerteil (52) wenigstens eine Rastnase (70) zur Verrastung an der Zwischenplatte (20) angeformt ist.

## Claims

1. A steering wheel horn contact unit comprising
a metal contact sheet (40)
and a carrier part (52) of plastic, the metal contact sheet (40) having at least one freely projecting horn contact tongue (46) which, as viewed in the switching movement direction (X), is surrounded by the carrier part (52),
**characterized in that** the metal contact sheet (40) is embedded in the carrier part (52) of plastic and is mounted therein,
and the carrier part (52), in and contrary to the switching movement direction (X), projects with respect to the horn contact tongue (46) at least **in that** section (64) by which it surrounds the horn contact tongue (46).

2. The steering wheel horn contact unit according to claim 1, **characterized in that** the horn contact tongue (46) is angled obliquely with respect to the rest of the metal contact sheet (40).

3. The steering wheel horn contact unit according to either of the preceding claims, **characterized in that** the carrier part (52), as viewed in the switching movement direction (X), completely surrounds the metal contact sheet (40).

4. The steering wheel horn contact unit according to any of the preceding claims, **characterized in that** the section (64) of the carrier part (52) which surrounds the horn contact tongue (46) is a peripherally closed ring.

5. The steering wheel horn contact unit according to any of the preceding claims, **characterized in that** the carrier part (52) has at least one integrally moulded bearing for a restoring spring (28).

6. The steering wheel horn contact unit according to any of the preceding claims, **characterized in that** the carrier part (52) is produced by injection-moulding around the metal contact sheet (40).

7. The steering wheel horn contact unit according to any of the preceding claims, **characterized in that** a metal contact sheet (40) has several horn contact tongues (46) each of which is surrounded by an associated section (64) of the carrier part (52).

8. An assembly comprising an intermediate plate (20) for a gas bag module (10) to which the gas bag module (10) is fastened, and at least one steering wheel horn contact unit (22) according to any of the preceding claims.

9. The assembly according to claim 8, **characterized in that** at least one detent nose (70) is formed integrally with the carrier part (52) for latching with the intermediate plate (20).

## Revendications

1. Unité de contact de klaxon pour volant de direction, comportant
une tôle de contact (40),
et une partie support (52) en matière plastique, la tôle de contact (40) possédant au moins une langue de contact de klaxon (56) librement en porte-à-faux qui, vue en direction de mouvement de commutation (X), est entourée par la partie support (52),
**caractérisée en ce que** la tôle de contact (40) est noyée dans la partie support (52) en matière plastique et est montée dans celle-ci,
et la partie support (52), dans la direction de mouvement de commutation (X) et à l'encontre de celle-ci, fait saillie par rapport à la langue de contact de klaxon (46) au moins dans le tronçon (64) avec lequel elle entoure la langue de contact de klaxon (46).

2. Unité de contact de klaxon pour volant de direction selon la revendication 1, **caractérisé en ce que** la langue de contact de klaxon (46) est coudée en oblique par rapport au reste de la tôle de contact (40).

3. Unité de contact de klaxon pour volant de direction selon l'une des revendications précédentes, **caractérisée en ce que** vue en direction de mouvement de commutation (X), la partie support (52) entoure complètement la tôle de contact (40).

4. Unité de contact de klaxon pour volant de direction selon l'une des revendications précédentes, **caractérisée en ce que** le tronçon (64) de la partie support (52), qui entoure la langue de contact de klaxon (46), est un anneau fermé à la périphérie.

5. Unité de contact de klaxon pour volant de direction selon l'une des revendications précédentes, **caractérisée en ce que** la partie support (52) possède au moins un palier conformé pour un ressort de rappel (28).

6. Unité de contact de klaxon pour volant de direction selon l'une des revendications précédentes, **caractérisée en ce que** la partie support (52) est réalisée par enrobage par injection de la tôle de contact (40).

7. Unité de contact de klaxon pour volant de direction selon l'une des revendications précédentes, **caractérisée en ce qu'**une tôle de contact (40) a plusieurs langues de contact de klaxon (46) qui sont chacune entourées par un tronçon (64) associé de la partie support (52).

8. Ensemble comportant une plaque intermédiaire (20) pour un module de coussin à gaz (10) sur laquelle est fixée le module de coussin à gaz (10), et au moins une unité de contact de klaxon pour volant de direction (22) selon l'une des revendications précédentes.

9. Ensemble selon la revendication 8, **caractérisée en ce que** sur la partie support (52) est conformé au moins un ergot d'enclenchement (70) destiné à être enclenché sur la plaque intermédiaire (20).
